# EUROPÄISCHE PATENTANMELDUNG

(11) **EP 1 022 083 A2**
(43) Veröffentlichungstag der Anmeldung: **26.07.2000**
(21) Anmeldenummer: 00101136.0
(22) Anmeldetag: 21.01.2000
(51) Int. Cl.: B23H 7/10

(54) **Düsenelement**

(30) Priorität: 23.01.1999 DE 19902611
(71) Anmelder: GKSS-FORSCHUNGSZENTRUM GEESTHACHT GMBH, 21502 Geesthacht (DE)
(72) Erfinder: Burmeister, Wilfried, 21483 Gülzow (DE)
(74) Vertreter: Niedmers, Ole, Dipl.-Phys.

(57) **Zusammenfassung**

Es wird ein Düsenelement (10) für die Zuführung eines flüssigen dielektrischen Mediums (11) an einen Reaktionsort (12) des Werkstücks (13) vorgeschlagen, an dem das Werkstück (13) mittels eines Elektroerosionsverfahrens, insbesondere mittels eines Drahterosionsverfahrens, behandelt wird, umfassend im wesentlichen ein zentrales Durchgangsloch (14) für den Durchtritt des dielektrischen Mediums (11) zum Werkstück (13). Das Düsenelement (10) ist dabei mit einem Verlängerungselement (15) versehen, das ein im wesentlichen axial zum Durchgangsloch (14) des Düsenelements (10) ausgebildetes Durchgangsloch (16) für das dielektrische Medium (11) aufweist.

## Beschreibung

Die Erfindung betrifft ein Düsenelement für die Zuführung eines flüssigen dielektrischen Mediums zu einem Reaktionsort eines Werkstücks, an dem das Werkstück mittels eines Elektroerosionsverfahrens, insbesondere mittels eines Drahterosionsverfahrens, behandelt wird, umfassend ein im wesentlichen zentrales Durchgangsloch für den Durchtritt des dielektrischen Mediums zum Werkstück.

Es ist bekannt, daß beim Bearbeiten von Werkstücken mittels eines Elektroerosionsverfahrens dafür gesorgt werden muß, daß die Oberfläche des zu behandelnden Werkstücks während der Elektroerosionsbehandlung fortwährend am Behandlungsort mittels eines flüssigen dielektrischen Mediums, beispielsweise in Form von ionisierten Wassers beaufschlagt werden muß. Diese fortwährende Beaufschlagung des Behandlungsorts mit einem flüssigen dielektrischen Medium ist für das Behandlungsergebnis von großer Wichtigkeit, insbesondere auch dann, wenn beispielsweise mittels eines Elektroerosionsverfahrens der Werkstoff geschnitten werden muß. Die richtige Spülung der Schneidflächen im Werkstoff mittels des dielektrischen Mediums ist ein ganz wichtiger Faktor für eine angestrebte hohe Schnittgeschwindigkeit.

Es wird angestrebt, daß Düsenelemente von Erodiervorrichtungen bzw. -einrichtungen in einem Idealabstand von ca. 0,05 mm über dem zu bearbeitenden Werkstück bewegt werden. Die zu bearbeitenden Werkstücke werden zur Elektroerosionsbehandlung auf einem in mehreren Freiheitsgraden beweglichen Spanntisch durch Spanneinrichtungen oder mittels gesondert ausgebildeter Spanneinrichtungen an diesem selbst befestigt. Wenn es sich bei den Werkstücken um sehr kleine Werkstücke handelt, beispielsweise um Werkstoff-Normproben aus Prototypabgüssen neu entwickelter Leichtbauwerkstücke, so sind die Spannelemente sehr oft im Wege und behindern die Möglichkeit, daß das Düsenelement so sehr auf das Werkstück abgesenkt werden kann, daß der vorgenannte optimale Spülspalt bzw. Idealabstand von ca. 0,05 mm nicht eingehalten werden kann. Zwangsweise muß somit das Düsenelement in einem relativ höheren Abstand zum Werkstück bei der Ausführung der Elektroerosion bewegt werden, wodurch die an sich angestrebte optimale Schneidleistung stark zurückgeht.

Es ist somit Aufgabe der vorliegenden Erfindung, ein Düsenelement zu schaffen, mit dem es ermöglicht wird, daß auch bei kleinen Werkstücken, d.h. auch bei feinen Schneidarbeiten, mittels der verschiedenen möglichen Elektroerosionsverfahren das Düsenelement in einem optimalen, geringen Abstand zum Behandlungsort gehalten werden kann, so daß auch für diese Fälle die an sich bei großen Werkstücken erreichbare Schneidgeschwindigkeit bzw. Schneidleistung schlechthin eingehalten werden kann, wobei das Düsenelement einfach und kostengünstig herstellbar sein soll und vorhandene Düsenelemente nicht nur völlig ersetzt werden können sollen, sondern auch erfindungsgemäß nachrüstbar sein sollen.

Gelöst wird die Aufgabe gemäß der Erfindung dadurch, daß das Düsenelement mit einem Verlängerungselement versehen ist, das ein im wesentlichen axial zum Durchgangsloch des Düsenelements ausgebildetes Durchgangsloch für das dielektrische Medium aufweist.

Der Vorteil der erfindungsgemäßen Lösung besteht im wesentlichen darin, daß nunmehr das Düsenelement direkt an das Werkstück im Bereich der Spannelemente herangeführt werden kann, ohne daß das Düsenelement im Nahbereich zum Spannelement in einen größeren Abstand zum Werkstück bewegt werden muß. Es ist also erfindungsgemäß möglich, auch im unmittelbaren Nahbereich zum Spannelement, mit dem das Werkstück auf dem Bearbeitungstisch festgehalten wird, den optimalen Abstand zum Behandlungsort von ca. 0,05 mm einzuhalten. Gegenüber bisherigen Düsenelementen für die verschiedenen Elektroerosionsverfahren, mit denen dieses nicht möglich war, wird erfindungsgemäß eine Steigerung der Bearbeitungsleistung bzw. Schnittleistung von 50 bis 80 % erreicht.

Bei einer vorteilhaften Ausgestaltung des Düsenelements weist das von Düsenelement abgewandte freie Ende des im wesentlichen stabförmigen Verlängerungselements ein erstes Hülsenelement mit einem axialen Durchgangsloch für das dielektrische Medium auf. Dieses erste Hülsenelement besteht vorzugsweise aus einem Werkstoff, der unterschiedlich zum Werkstoff des Verlängerungselements ausgebildet ist, d.h. das erste Hülsenelement besteht beispielsweise vorzugsweise aus einem Kunststoffwerkstoff.

Da Kunststoffwerkstoff gegenüber dem regelmäßig aus einem metallischen Werkstoff bestehenden, zu bearbeitenden Werkstück weicher ist, kann das erste Hülsenelement als Schutzelement dienen, wenn beim Einrichten der Vorrichtung, mit der das Elektroerosionsverfahren ausgeführt wird, das Verlängerungselement mit der Oberfläche des Werkstücks in Kontakt kommt und es ohne vorgesehenes Hülsenelement gegebenenfalls beschädigen würde. Das erste Hülsenelement hat somit im wesentlichen eine Schutzfunktion vor Beschädigung des Werkstücks durch das durch das Verlängerungselement verlängerte Düsenelement.

Das erste Hülsenelement kann grundsätzlich auf beliebige Art mit dem Verlängerungselement verbunden werden, beispielsweise vorzugsweise mittels einer Preßpassungsverbindung, es kann aber auch angeklebt, aufgeschraubt oder mittels Schraubverbindungsmittel damit verbunden sein.

Bei einer anderen vorteilhaften Ausgestaltung des Düsenelements ist das erste Hülsenelement auf dem Verlängerungselement axial bewegbar angeordnet. Diese Ausgestaltung des Düsenelements eignete sich insbesondere dann, wenn Werkstücke mit sphärischer oder gewölbter oder konischer Oberfläche, beispielsweise Abgußrohlinge aus der Werkstoffentwicklung, mittels eines Elektroerosionsverfahrens geschnitten oder sonst wie bearbeitet werden sollen. Durch die axiale Bewegbarkeit des ersten Hülsenelements wird quasi das Verlängerungselement variabel verlängert, um sich an die Oberfläche des sphärisch gewölbten oder konischen Werkstücks so anpassen zu können, daß fortwährend der angestrebte Idealabstand von 0,05 mm zwischen Verlängerungselement bzw. hier dem ersten Hülsenelement und der Oberfläche des Werkstücks eingehalten werden kann. Bei den bisherigen festen Düsenelementen war dieses nicht möglich und auch eine entsprechende Abstandssteuerung des Düsenelements zur Oberfläche von sphärischen und/oder konischen und/oder gewölbten Werkstücken war nur mit sehr großem Aufwand und mit nur sehr unbefriedigendem Erfolg möglich.

Um auch für diese Fälle von Werkstücken mit sphärischen Oberflächen eine optimale Schneidleistung zu erreichen, d.h. fortwährend auch einen Idealabstand von ca. 0,05 mm einzuhalten, wenn es sich, vergleiche oben, um kleine, zu bearbeitende Werkstücke handelt und das Düsenelement in den Bereich der Spannelemente bewegt werden muß, ist vorteilhafterweise das erste Hülsenelement zu seinem freien Ende hin konisch verjüngt ausgebildet, so daß es bis unmittelbar in den angrenzenden bzw. Nachbarbereich zu einem Spannelement an das Werkstück im angestrebten Idealabstand herangeführt werden kann.

Auch kann vorteilhafterweise das erste Hülsenelement an seinem freien Ende ein zweites Hülsenelement mit einem axialen Durchgangsloch für das dielektrische Medium aufweisen, welches vorzugsweise ebenfalls aus einem Kunststoffwerkstoff bestehen kann, wodurch auf gleiche Weise, wie oben beschrieben, eine Beschädigung der Oberfläche des Werkstücks verhindert werden kann.

Auch kann vorzugsweise das zweite Hülsenelement über eine Preßpassungsverbindung mit dem ersten Hülsenelement verbunden sein, es sind aber auch hier wiederum verschiedene andere Befestigungsmöglichkeiten denkbar, beispielsweise mittels eines Gewindes, mittels Klebung oder mittels gesonderter Schraub- oder Spannmittel.

Dann, wenn das erste Hülsenelement wiederum eine Verlängerung des Verlängerungselements bildet, ist das erste Hülsenelement vorteilhafterweise innerhalb einer vorgebbaren Länge gegenüber dem Verlängerungselement axial verschiebbar, so daß sich während des Erosionsvorgangs quasi das Verlängerungselement automatisch an eine sphärische, schräge oder konische Oberfläche eines Werkstücks anpaßt, d.h. fortwährend einen angestrebten, optimalen Abstand, beispielsweise von ca. 0,05 mm, einhält.

Vorteilhafterweise ist die vorgebbare Länge der axialen Verschiebbarkeit des ersten Hülsenelements gegenüber dem Verlängerungselement begrenzt, beispielsweise dadurch, daß bei einer weiteren vorteilhaften Ausgestaltung des Düsenelements im ersten Hülsenelement ein axialer Schlitz vorgesehen ist, in den ein im Verlängerungselement angeordneter, von diesem im wesentlichen rechtwinklig wegstehender Stift hineinragt, der somit für eine Begrenzung der axialen Bewegbarkeit in Verbindung mit dem axialen Schlitz im Hülsenelement sorgt. Durch diese einfache Maßnahme brauchen keine Veranstaltungen getroffen werden, die ein Abfallen des ersten Hülsenelements vom Verlängerungselement verhindern, wenn das Düsenelement zum Einrichten des Erosionsvorgangs auf das Werkstück zubewegt wird bzw. wenn nach Abschluß des Erosionsvorgangs das Düsenelement vom Werkstück wieder wegbewegt wird, was regelmäßig in vertikaler Richtung relativ zum Werkstück geschieht.

Die Erfindung wird nun unter Bezugnahme auf die nachfolgenden schematischen Zeichnungen anhand eines Ausführungsbeispiels eingehend beschrieben. Darin zeigen:
- Fig. 1: eine Teilansicht einer mit einem Werkstück und einer Spanneinrichtung für das Werkstück zusammenwirkenden Einrichtung bzw. Vorrichtung zur Ausführung eines Elektroerosionsvorgangs, beispielsweise des Schneidens des Werkstücks,
- Fig. 2: in der Seitenansicht in einer Teilansicht drei Stellungen der Elektroerosionseinrichtung bei einer in behandelnden, sphärischen Oberfläche eines zu behandelnden Werkstücks,
- Fig. 3: eine Ansicht gemäß Fig. 1, bei der ein erfindungsgemäß ausgebildetes Düsenelement Verwendung findet,
- Fig. 4: eine Ansicht gemäß Fig. 2, bei der ein erfindungsgemäß ausgebildetes Düsenelement in drei Stellungen der Elektroerosionseinrichtung bei einer zu behandelnden sphärischen Oberfläche eines zu behandelnden Werkstücks zusammenwirkt,
- Fig. 5: in der Seitenansicht eine Grundausführungsform des erfindungsgemäßen Düsenelements und
- Fig. 6: eine Ausführungsform des erfindungsgemäßen Düsenelements mit einem axial zum Verlängerungselement verschiebbaren Hülsenelement, das an seiner Spitze mit einem zweiten Hülsenelement versehen ist, wobei das erste Hülsenelement gegenüber dem Verlängerungselement in seiner axialen Beweglichkeit innerhalb einer vorgegebenen Länge begrenzt ist.

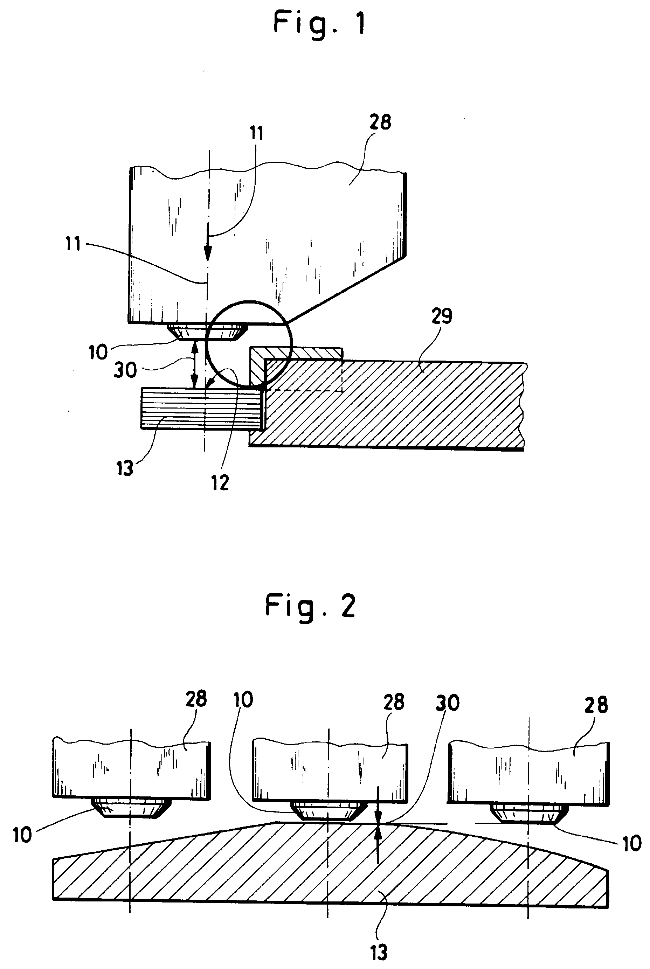

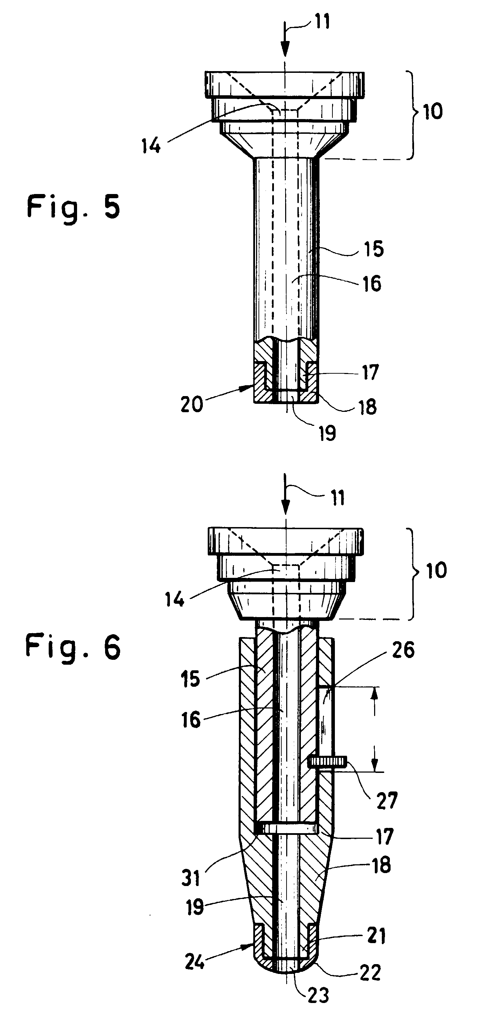

Es wird zunächst Bezug genommen auf die Fig. 1 und 5. In Fig. 1 ist eine Einrichtung 28 beispielsweise zum Schneiden eines Werkstücks 13 ersichtlich. Elektroerosionseinrichtungen 28 weisen ein Düsenelement 10 auf, über das ein flüssiges dielektrisches Medium 11, das regelmäßig durch ionisiertes Wasser gebildet wird, auf den Reaktions- bzw. Behandlungsort 12 gegeben wird. Da die Funktion einer Elektroerosionseinrichtung, ob nun speziell in Form einer Drahterosionsschneideinrichtung oder sonstwie ausgebildet, an sich der Fachwelt bekannt ist, wird darauf hier nicht weiter eingegangen. Hervorzuheben ist an dieser Stelle lediglich, daß zum Erreichen einer optimalen Behandlungs- bzw. Schneidgeschwindigkeit ein optimaler Abstand 30 eingehalten werden muß, der im Bereich von ca. 0,05 mm liegt. Es wird angestrebt, daß dieser Abstand 30 während der elektroerosiyen Behandlung eines Werkstücks 13 immer eingehalten wird, um die Schneidgeschwindigkeit bzw. Schneidleistung, was gleichzeitig für eine sonstige elektroerosive Behandlung eines Werkstücks 13 gilt, fortwährend zu gewährleisten.

Bei im Stand der Technik bekannten Verfahren und Einrichtungen 28 zur Ausführung einer Elektroerosion auf einem Werkstück 13 wird normalerweise das Werkstück 13 auf einem Tisch befestigt (hier nicht dargestellt) und mit einer Spanneinrichtung 29 dort befestigt. Es kann auch so sein, daß die Spanneinrichtung 29 das Werkstück 13 selbst erfaßt, ohne daß dafür ein Auflagetisch benutzt wird, vergleiche Fig. 1. Wenn es sich bei den Werkstücken 13 um kleine Werkstücke handelt, ist das bekannte Düsenelement 10 daran gehindert, das dielektrische Medium 11, in Fig. 1 angedeutet in axialer Richtung aus dem Düsenelement 10 austretend, bis unmittelbar an den Rand der Spanneinrichtung 29 zu verbringen, da die konstruktionsbedingte Ausdehnung des Düsenelements 10 dieses verhindert, wenn der optimal geringe Abstand 30 von besagten 0,05 mm eingehalten werden soll.

Zur Behebung dieses Mangels weist das erfindungsgemäße Düsenelement 10, das in Fig. 5 in einer Grundversion dargestellt ist, ein Verlängerungselement 15 auf, das die Düse 10 axial verlängert. Es ist möglich, daß das im wesentlichen stabförmige Verlängerungselement 15 in schon bestehende Düsenelemente 10 von bestehenden Elektroerosionseinrichtungen 28 eingesetzt wird, d.h. dort wahlweise verwendet werden kann oder auch bestehende Elektroerosionseinrichtungen 28 in bezug auf dort vorhandene Düsenelemente nachgerüstet werden können. Es ist aber auch möglich, wie in Fig. 5 dargestellt, das Verlängerungselement 15 einstückig mit dem Düsenelement 10 auszubilden. Das Düsenelement 10 weist ein Durchgangsloch 14 auf, das axial durch das im Düsenelement 10 ausgebildete Durchgangsloch 14 verlängert ist. Am freien Ende 17 des Verlängerungselements 15 kann ein erstes Hülsenelement 18 angeordnet sein. Dieses weist ebenfalls ein axiales Durchgangsloch 19 auf. Das erste Hülsenelement 18 ist auf geeignete Weise, beispielsweise mittels einer Preßpassungsverbindung 20, mit dem Verlängerungselement 15 verbunden.

Bei der in Fig. 6 ausgestalteten modifizierten Ausführungsform des Düsenelements 10 ist das erste Hülsenelement 15 derart ausgebildet, das es auf dem Verlängerungselement 15 axial bewegbar ist. Die axiale Bewegbarkeit wird durch das Zusammenwirken eines Stiftes 27, der im Verlängerungselement 15 befestigt ist, und eines axialen Schlitzes 26, der im ersten Hülsenelement 18 ausgebildet ist, bewirkt und begrenzt. Das freie Ende 21 des ersten Hülsenelements ist bei dieser Ausgestaltung konisch verjüngt ausgebildet. Auch auf dem freien Ende 21 des ersten Hülsenelements 18 kann ein zweites Hülsenelement 22 vorgesehen sein. Dieses weist ebenfalls ein axiales Durchgangsloch 23 für das dielektrische Medium 11 auf. Auch das zweite Hülsenelement 22 ist, genau wie bei der ersten Ausgestaltung des Düsenelements 10 gemäß Fig. 5, über eine geeignete Verbindung, beispielsweise eine Preßpassungsverbindung 24, mit dem ersten Hülsenelement 18 verbunden.

Unter Bezugnahme auf Fig. 2 ist ersichtlich, daß bei einer im Stand der Technik bekannten Düseneinrichtung 10, wie sie im Zusammenhang mit Fig. 1 beschrieben worden ist, eine Einhaltung eines optimalen geringen Abstands von ca. 0,05 mm zwischen Düse und Oberfläche eines zu behandelnden Werkstücks 13 nur im Bereich der maximalen Erhebung des Werkstücks 13 möglich (mittlere Stellung) ist. Bei der rechten und bei der linken Stellung ist der Abstand zwischen dem Düsenelement 10 und dem Werkstück 13 so groß, daß das dielektrische Medium nicht seine vorgegebene Wirkung entfalten kann, so daß das Behandlungsergebnis gegenüber dem Behandlungsergebnis in der mittleren Stellung von Fig. 2 signifikant schlechter ist. Diese Probleme treten immer auf, wenn das Werkstück 13 eine sphärische oder sonstwie konturierte Oberfläche aufweist, die von einer Ebene abweicht.

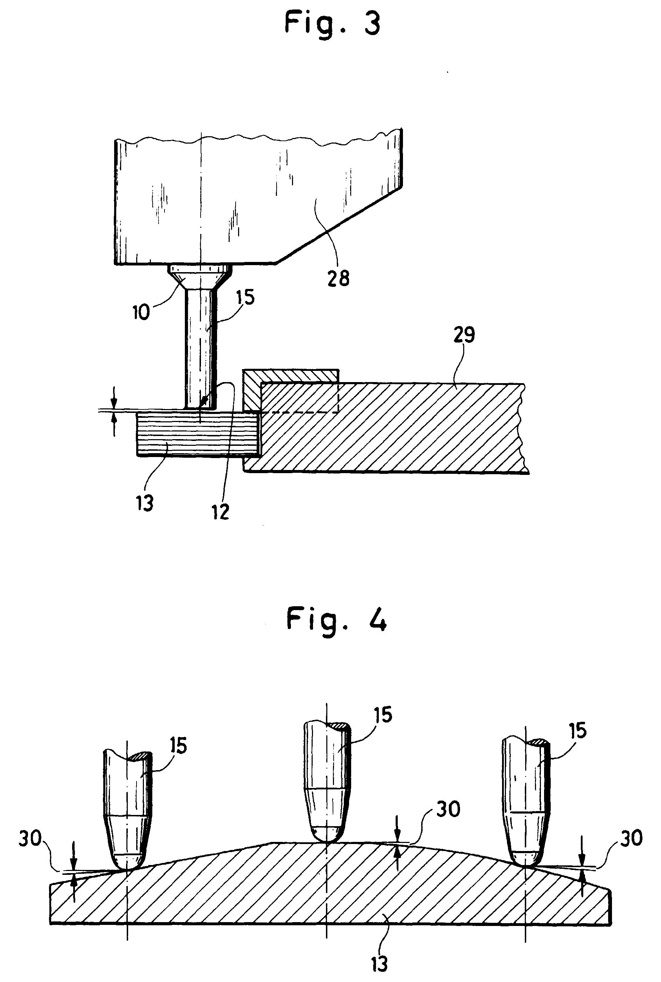

In Fig. 4 ist eine der Fig. 2 entsprechende unterschiedliche Stellung des erfindungsgemäß ausgebildeten Düsenelements 10 dargestellt, wobei das dort verwendete Düsenelement der modifizierten Ausführungsform des Düsenelements 10 gemäß Fig. 6 entspricht. Bedingt durch das durch das Durchgangsloch 16, das Durchgangsloch 18 und das Durchgangsloch 23 auf die Oberfläche des Werkstücks 13 geförderte dielektrische Medium 11 kann sich zwischen dem freien Ende 17 des Verlängerungselements 15 und dem ersten Hülsenelement 18 gebildeten Innenraum 31 ein vorbestimmbarer Vorrat des dielektrischen Mediums 11 bilden, der das erste Hülsenelement 18, bezogen auf die Darstellung der Figuren, vertikal nach unten drückt. Dadurch kann erreicht werden, daß auch bei sphärisch oder sonstwie nicht eben in ihrer Oberfläche konturierten Werkstücken 13 immer ein optimal geringer Abstand zwischen Düsenelement 10 bzw. an sich dem ersten Hülsenelement 18 und der Oberfläche der Werkstücke 13 einstellt, beispielsweise im Bereich von 0,05 mm. Diese automatische vertikale Verstellung des Düsenelements 10 bzw. des ersten Hülsenelements 18 des Düsenelements 10 ist in drei Stellungen in Fig. 4 dargestellt.

Das Verlängerungselement 15 kann aus dem Werkstoff wie dem des Düsenelements 10 bestehen, das erste und das zweite Hülsenelement 18, 22 kann ebenfalls aus dem gleichen Werkstoff wie das Düsenelement 10 bzw. das Verlängerungselement 15 bestehen, es können dafür aber auch unterschiedliche Werkstoffe gewählt werden, beispielsweise Kunststoff.

### Bezugszeichenliste

- 10: Düsenelement
- 11: dielektrisches Medium
- 12: Reaktionsort
- 13: Werkstück
- 14: Durchgangsloch (Düsenelement)
- 15: Verlängerungselement
- 16: Durchgangsloch (Verlängerungselement)
- 17: freies Ende (Verlängerungselement)
- 18: erstes Hülsenelement
- 19: Durchgangsloch (erstes Hülsenelement)
- 20: Preßpassungsverbindung
- 21: freies Ende (erstes Hülsenelement)
- 22: zweites Hülsenelement
- 23: Durchgangselement (zweites Hülsenelement)
- 24: Preßpassungsverbindung
- 25: Länge
- 26: Schlitz
- 27: Stift
- 28: Elektroerosionseinrichtung
- 29: Spanneinrichtung
- 30: Abstand
- 31: Innenraum

## Patentansprüche

1. Düsenelement für die Zuführung eines flüssigen dielektrischen Mediums zu einem Reaktionsort eines Werkstücks, an dem das Werkstück mittels eines Elektroerosionsverfahrens, insbesondere mittels eines Drahterosionsverfahrens, behandelt wird, umfassend ein im wesentlichen zentrales Durchgangsloch für den Durchtritt des dielektrischen Mediums zum Werkstück, dadurch gekennzeichnet, daß das Düsenelement (10) mit einem Verlängerungselement (15) versehen ist, das ein im wesentlichen axial zum Durchgangsloch (14) des Düsenelements (10) ausgebildetes Durchgangsloch (16) für das dielektrische Medium (11) aufweist.

2. Düsenelement nach Anspruch 1, dadurch gekennzeichnet, daß das von Düsenelement (10) abgewandte freie Ende (17) des im wesentlichen stabförmigen Verlängerungselements (15) ein erstes Hülsenelement (18) mit einem axialen Durchgangsloch (19) für das dielektrische Medium aufweist.

3. Düsenelement nach Anspruch 2, dadurch gekennzeichnet, daß das erste Hülsenelement (18) aus einem Kunststoffwerkstoff besteht.

4. Düsenelement nach einem oder beiden der Ansprüche 2 oder 3, dadurch gekennzeichnet, daß das erste Hülsenelement (18) über eine Preßpassungsverbindung (20) mit dem Verlängerungselement (15) verbunden ist.

5. Düsenelement nach einem oder beiden der Ansprüche 2 oder 3, dadurch gekennzeichnet, daß das erste Hülsenelement (18) auf dem Verlängerungselement (15) axial bewegbar angeordnet ist.

6. Düsenelement nach einem oder mehreren der Ansprüche 2 oder 5, dadurch gekennzeichnet, daß das erste Hülsenelement (18) zu seinem freien Ende (21) hin konisch verjüngt ausgebildet ist.

7. Düsenelement nach einem oder mehreren der Ansprüche 2, 5 und 6, dadurch gekennzeichnet, daß das erste Hülsenelement (18) an seinem freien Ende (21) ein zweites Hülsenelement (22) mit einem axialen Durchgangsloch (23) für das dielektrische Medium aufweist.

8. Düsenelement nach Anspruch 7, dadurch gekennzeichnet, daß das zweite Hülsenelement (22) aus einem Kunststoffwerkstoff besteht.

9. Düsenelement nach Anspruch 8, dadurch gekennzeichnet, daß das zweite Hülsenelement (22) über eine Preßpassungsverbindung (24) mit dem ersten Hülsenelement (18) verbunden ist.

10. Düsenelement nach einem oder mehreren der Ansprüche 2, 5 bis 9, dadurch gekennzeichnet, daß das erste Hülsenelement (18) innerhalb einer vorgebbaren Länge (25) gegenüber dem Verlängerungselement (15) axial verschiebbar ist.

11. Düsenelement nach Anspruch 10, dadurch gekennzeichnet, daß im ersten Hülsenelement (18) ein axialer Schlitz (26) vorgesehen ist, in den ein im Verlängerungselement (15) angeordneter, von diesem im wesentlichen rechtwinklig wegstehender Stift (27) hineinragt.
